# EUROPEAN PATENT SPECIFICATION

(11) **EP 4 558 259 B1**
(45) Date of publication and mention of the grant of the patent: **10.09.2025**
(21) Application number: 24746792.1
(22) Date of filing: 18.07.2024
(51) Int. Cl.: B01D 53/94, B01J 23/44, B01J 35/00, B01J 37/02, F01N 3/10, B01J 35/56, F01N 3/28, F01N 3/035, F01N 3/20

(54) **OXIDATION CATALYST ARTICLE WITH PHOSPHOROUS RESISTANCE**
OXIDATIONSKATALYSATORARTIKEL MIT PHOSPHORBESTÄNDIGKEIT
ARTICLE DE CATALYSEUR D'OXYDATION RÉSISTANT AU PHOSPHORE

(30) Priority: 21.07.2023 EP 23187081
(43) Date of publication of application: 28.05.2025
(73) Proprietor: Johnson Matthey Public Limited Company, London EC2V 7AD (GB)
(72) Inventor: CHIFFEY, Andrew Francis, Royston Hertfordshire SG8 5HE (GB); COLE, Kieran John, Royston Hertfordshire SG8 5HE (GB); COOPER, Oliver James, Royston Hertfordshire SG8 5HE (GB); MOREAU, Francois Pierre Henri, Royston Hertfordshire SG8 5HE (GB); PINTO, Jose Jorge Baeta Fontinha, Royston Hertfordshire SG8 5HE (GB); PLATT, George Makoto Henry, Reading Berkshire RG4 9NH (GB)
(74) Representative: Johnson Matthey Plc
(86) International application number: PCT/GB2024/051881
(87) International publication number: WO 2025/022092

(56) References cited:
- EP-A1- 3 888 774
- WO-A1-2023/041407
- CN-A- 109 985 624
- CN-A- 115 066 296
- US-A1- 2015 165 423
- US-A1- 2022 379 293

## Description

The present invention relates to an oxidation catalyst, especially a Diesel Oxidation Catalyst (DOC), with an improved resistance to phosphorous poisoning. The invention further relates to an exhaust gas treatment system comprising the article and an apparatus comprising a diesel engine and the exhaust gas treatment system. A method is provided which provides an optimised version of the oxidation catalyst.

Combustion engines produce exhaust gases that contain pollutants, such as carbon monoxide (CO), unburned hydrocarbons (HCs), oxides of nitrogen (NOx) and particulate matter (PM). Emissions standards for pollutants in an exhaust gas produced by a combustion engine, particularly for vehicular engines, are becoming increasingly stringent. There is a need to provide improved catalysts and exhaust systems for treating and removing the pollutants in such exhaust gases that can meet these standards and which are cost-effective. It is particularly desirable that these catalysts show consistent performance over their lifetime.

The exhaust gas from gasoline and diesel engines is commonly treated with a catalyst that can oxidise (i) carbon monoxide (CO) to carbon dioxide (CO₂); and (ii) hydrocarbons (HCs) to water (H₂O) and carbon dioxide (CO₂). The exhaust gas from a compression ignition engine, such as a diesel engine, is typically treated with an oxidation catalyst (commonly called a diesel oxidation catalyst (DOC)) that performs oxidation reactions (i) and (ii).

Oxidation catalysts for compression ignition internal combustion engines typically contain one or more platinum group metals. The specific platinum group metal(s) selected for inclusion in an oxidation catalyst will depend on a variety of factors, such as reactivity toward specific pollutants and under differing exhaust gas conditions, cost, durability at high temperatures, chemical compatibility with the support material and any other components of the catalyst, and susceptibility to poisoning by impurities. For example, platinum group metals (PGMs) such as platinum (Pt) and palladium (Pd) are each able to oxidise carbon monoxide (CO) and hydrocarbons (HCs) in an exhaust gas from a compression ignition engine. Palladium is more susceptible to poisoning by sulfur in fuel compared to platinum but has greater thermal durability.

Strategies for meeting current emissions standards for heavy-duty diesel engines typically adopt an exhaust system architecture comprising a series of catalysed substrates and injectors. In order, from upstream to downstream (upstream being relative to an engine connected or connectable to the exhaust system), a typical exhaust system comprises a hydrocarbon fuel injector, a diesel oxidation catalyst (DOC), a catalysed soot filter (CSF, i.e. a catalysed diesel particulate filter (DPF)), a urea (ammonia precursor) injector, one or more selective catalytic reduction (SCR) catalyst and an ammonia slip (ASC) catalyst, also known as an ammonia oxidation (AMOx) catalyst (see e.g. WO2011140251A2). The hydrocarbon fuel injector can be a fuel injector for an engine cylinder - in which case additional hydrocarbon fuel is injected into the cylinder over and above that which is required to power the engine piston stroke; and/or an injector for injecting hydrocarbon fuel directly into an exhaust gas downstream from the engine.

As well as performing the above reactions (i) and (ii), some diesel oxidation catalysts are also able to oxidise nitrogen monoxide (NO) to nitrogen dioxide (NO₂), which can aid removal of NOx using an additional, downstream emissions control device. During normal operation the aim of a DOC is to control CO and HC emissions in engine exhaust gas and to promote the conversion of NO to NO₂ in the gas for downstream passive filter regeneration (the combustion of particulate matter held on a filter in NO₂ at lower exhaust gas temperatures than in O₂ in the exhaust gas, i.e. the so-called CRT^{®} effect) or optimisation of the SCR reaction.

SCR catalysts are designed to catalyse the reduction of NOx selectively using a nitrogenous reductant, typically this may be derived from an ammonia precursor such as urea, which reductant is injected into a flowing exhaust gas upstream from the SCR catalyst in an amount to promote the principal NOx reduction reactions of:
(1) 4 NH₃ + 4NO + O₂ → 4N₂ + 6H₂O;
(2) 4 NH₃ + 2NO₂ + O₂ → 3N₂ + 6H₂O; and
(3) NO + NO₂ + 2 NH₃ → 2N₂ + 3/2H₂O (the preferred, so-called "fast SCR reaction").

It will be understood that each of reactions (1)-(3) can occur in parallel, but the kinetically fastest reaction will be favoured. Therefore, in an exhaust gas containing a NO₂:NOx ratio of 0.5, the kinetically favoured fast SCR reaction dominates. Most of the NOx emitted from a diesel engine is in the form of NO. Accordingly, it is desirable for the upstream DOC to promote NO oxidation for NO₂ production.

Diesel particulate matter filter systems for vehicles involve the interaction of filter materials with regeneration techniques. "Regeneration" is the selected method of combusting diesel particulate matter held on a filter. Regeneration is conducted infrequently, but the period between regeneration events is dependent on several factors including engine design, filtration efficiency during normal operation, engine load during normal operation etc. According to a recent paper, empiric regeneration frequencies for heavy-duty diesel trucks varied from 3-100 hours and 23-4078 miles (see C. Ruehl et al, Environ. Sci. Technol, 2018, 52(10), pp 5868-5874). If particulate matter builds up on a filter, it increases the backpressure in the system, causing the engine to "work" harder against the back pressure, thereby decreasing fuel economy. Increased backpressure in the system can also increase engine component wear. Regeneration techniques can be broadly divided into the categories of passive, active and combinations of both passive and active. In passive systems, particulate matter combustion is assisted without active intervention. For example, the oxidation temperature of the particulate matter can be lowered to a level where the filter can be auto-regenerated during regular vehicle operation. Examples include catalysing the filter medium; addition of a catalyst fuel additive so that the particulate matter on the filter includes in its composition catalyst for promoting soot combustion; and generating nitrogen dioxide (NO₂) upstream of the filter for combusting the particulate matter held on the filter: particulate matter combusts in NO₂ at lower temperatures than in oxygen. This is the so-called CRT^{®} effect (see e.g. EP0341832).

Active regeneration is conducted infrequently, but the period between regeneration events is dependent on several factors including engine design, filtration efficiency during normal operation, engine load during normal operation etc.

In passive-active systems, the "passive" filter catalyst and/or upstream (CRT^{®} effect-promoting) NO oxidation catalyst etc. can be utilised to assist passive regeneration when driving conditions prevent passive regeneration of a filter, e.g. during periods of slow driving when the exhaust gas temperature can be insufficient to promote adequate passive regeneration. Active regeneration can be done by injecting hydrocarbon fuel upstream of the (CRT^{®} effect-promoting) NO oxidation catalyst and combusting the fuel on the NO oxidation catalyst, thereby creating a localised increase in the temperature of the exhaust gas at the oxidation catalyst, which heated exhaust gas then flows downstream to regenerate the filter. Using fuel to actively heat a filter comes at a cost of reduced vehicle fuel economy. However, the periods of passive and active regeneration can interact to reduce the frequency and duration of active regenerations, thereby reducing the overall impact of regeneration on fuel economy. It is an advantage to be able to perform active regenerations starting at as low exhaust gas temperatures as possible, as the ability to trigger a lower exhaust gas temperature reduces particulate matter build-up - and consequent backpressure - in the exhaust system and/or the necessity to actively heat the filter up to a temperature when regeneration can be done; triggering an active regeneration at too low a temperature risks extinguishing an exotherm on the DOC and subsequent emission of additionally injected hydrocarbon fuel to atmosphere. That is, a failed active regeneration increases atmospheric hydrocarbon pollution without regenerating the filter.

A "pure" active regeneration system (i.e. no passive regeneration assistance) may include a (full or partial flow) fuel burner or electric heating (upstream or embedded in the filter).

Where an oxidation catalyst (whether for passive or passive-active system) is used for treating exhaust gas from a diesel engine, the oxidation catalyst is often referred to as a diesel oxidation catalyst (DOC).

Modern DOCs, particularly for Heavy-Duty Diesel application, are typically configured to act as an exotherm generation catalyst during active DPF/CSF regeneration, promoted by injection of hydrocarbon fuel into exhaust gas upstream of the DOC. For the avoidance of doubt, the fuel injection/exotherm generation event does not take place during normal operation: normal operation is considered to be the period between fuel injection/exotherm generation events (see the C. Ruehl *et al.* paper discussed hereinabove). The DPF/CSF controls particulate matter (PM) emissions and the DOC and CSF can promote the overall conversion of NO to NO₂ exiting the CSF to enhance the SCR reaction performance on a downstream SCR catalyst.

In order to generate these exotherms on the DOC, an amount of hydrocarbon (HC) is injected upstream of the DOC (e.g. ~2000ppm). As explained above, HC injection can be done via engine cylinder fuel injector; or using an injector for injecting hydrocarbon fuel directly into an exhaust gas downstream from the engine. Additional injection of hydrocarbon fuel in-cylinder intended for emission as part of exhaust gas for the purpose of creating an exotherm on a downstream DOC are generally electronically controlled by an Engine Control Unit, including a central processing unit(s) pre-programmed, when in use, variably to control fuel injection timing, in combination with fuel injection systems, such as common rail. These arrangements allow for the application of such processes as multiple injections during one engine cycle. As the name suggests, multiple fuel injections replace a single injection event with multiple discrete injection events.

Injection events that occur after the main injection, i.e. the injection of fuel intended primarily for powering the engine piston stroke, often referred to as post-injections or after-injections, can be used to control PM emissions and/or to manage exhaust aftertreatment systems: post-injections occur very shortly after the main injection event while the process of combusting the main fuel injection is still underway and are intended to burn in-cylinder to generate an exotherm to heat exhaust gas before it leaves the cylinder; and after-injections occur much later after the combustion process is complete and are not intended to burn in-cylinder. "Post-injection" generally contains less than 20% of the total fuel injected in an engine cycle.

Provided that the DOC is hot enough, the additional HC in exhaust gas will lead to the production of an exotherm on the DOC, heating the exhaust gases and, consequently, heating those components downstream of the DOC (up to temperatures of around 500°C). If the DOC is not hot enough then it may be necessary through engine management to provide a hotter exhaust gas from the engine , e.g. by post injection in-cylinder, to heat up the DOC sufficiently to allow an active regeneration to occur, all with an associated energy and performance impact.

Accordingly, it is desirable to provide a DOC with the ability to generate an exotherm from as low an initial temperature as possible. The lower this temperature, the more likely the engine is to already be working above the exotherm temperature when an exotherm is required and/or the smaller the amount of active heating energy is needed to reach the regeneration temperature.

There are believed to be two basic mechanisms where catalysts for treating exhaust gas from internal combustion engines can become poisoned: (i) selective poisoning, in which a contaminant reacts directly with an active site or catalyst support causing a reduction in activity or a catastrophic loss in activity; and (ii) non-selective poisoning, which causes a loss of performance by sterically hindering access to active sites or pores in a catalyst support by fouling (or masking) a surface of the support or active sites. The inventors have found that phosphorus (as phosphoric acid droplets) is a non-selective poison of the exotherm generation function of the oxidation catalysts of active or active-passive systems. Formation of glassy zinc phosphate deposits on a washcoat surface can also non-selectively deactivate a catalyst by creating a diffusion barrier, preventing exhaust gas molecules reaching active sites.

Poisons which chemically react with catalyst components such as, at higher temperature, phosphorus, can also poison the exotherm generation function of the oxidation catalyst. A major source of phosphorus in exhaust gas is likely to be from the additives zinc dialkyl dithio phosphate (ZDDP), used in mineral-based oils, or in synthetic oil. These additives are used to protect the moving parts of the engine, such as the camshaft, from wear through use. Heavy-Duty vehicle engine oils have higher concentrations of additives than lubricants for use in light-duty vehicle engines, such as those used in passenger cars, so the problem of zinc and phosphorus deactivation is particularly problematic for Heavy-Duty vehicle engines. Phosphorus deposits cannot be removed from the catalyst, except under conditions which are likely to cause thermal deactivation of the oxidation catalyst and other catalyst components in the exhaust system (that is, very high operating temperatures).

The present invention builds upon the systems disclosed in Applicant's WO2020260669 and WO2021074605. These disclose composite, zoned oxidation catalysts for use in an exhaust system for treating an exhaust gas produced by a vehicular compression ignition internal combustion engine, preferably for a heavy-duty diesel vehicle. These in turn built upon WO 2013/088152 A1 with the goal of reducing the quantity of total platinum group metal present in the diesel oxidation catalyst in general. These documents aim to provide a composite oxidation catalyst, i.e. a multifunction catalyst arrangement on a single substrate, which can achieve stable NO₂ generation for operation of downstream catalyst functions, including the CRT^{®} effect for combustion of particulate matter on a downstream filter and/or promotion of a so-called fast reaction on a selective catalytic reduction (SCR) catalyst. An optional feature of the composite, zoned oxidation catalysts disclosed in Applicant's WO2020260669 and WO2021074605 is a guard bed washcoat overlayer for protecting at least part of the underlying first catalyst washcoat zone from phosphorus and/or zinc poisoning at an inlet end thereof. Another composite, zoned oxidation catalyst is disclosed in document EP3888774A1.

However, the inventors have found that the systems disclosed in Applicant's WO2020260669 and WO2021074605 are more resource intensive to manufacture, in that the guard bed washcoat overlayer is coated in a separate, additional washcoating step. The design including the guard bed can also undesirably increase backpressure in the system and reduce mass transfer of exhaust gas to the underlying highly active exotherm-generating first catalyst washcoat zone.

Accordingly, it is an object of the present invention to provide an oxidation catalyst with improved resistance to catalyst poisoning, particularly phosphorus and/or zinc poisoning, and consequent improved aged performance after exposure to such catalyst poisoning, or at least to tackle problems associated therewith in the prior art or provide a commercially viable alternative thereto. Preferably the oxidation catalyst has reduced backpressure when in use and is more resource-efficient to manufacture.

Accordingly the present invention provides an oxidation catalyst article comprising: a flow-through honeycomb substrate having an inlet end and an outlet end and a longitudinal length extending therebetween and comprising an array of channels each defined by a channel wall, a first washcoat extending from the inlet end up to 40% of the longitudinal length of the substrate and comprising a first platinum group metal composition on a first alumina support, the first washcoat having a total combined loading of Pt and Pd of X g/L (gft⁻³), a second washcoat extending from the inlet end up to 85% of the longitudinal length of the substrate and entirely overlapping the first washcoat, the second washcoat comprising a second platinum group metal composition on a second alumina support, the second washcoat having a total combined loading of Pt and Pd of Y g/L (gft⁻³); and a third washcoat extending from the outlet end comprising a third platinum group metal composition wherein the third platinum group metal composition is platinum only or both platinum and palladium on a third alumina support, the third washcoat having a total platinum group metal loading of Z g/L (gft⁻³); wherein 2Z<X>1.5Y, and wherein the third washcoat does not overlap the first washcoat.

The technical effect of the invention defined in the above statement is shown in, among others, Examples 1 to 4 inclusive.

The present disclosure will now be described further. In the following passages different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous. It is intended that the features disclosed in relation to the product may be combined with those disclosed in relation to the method and *vice versa.*

The present invention builds on existing DOC designs, such as Applicant's WO2020260669 and WO2021074605, which have a highly loaded front zone of PGMs as discussed above. In the existing DOC designs, the high loading is obtained by impregnating the inlet end of an existing washcoat layer with additional PGMs such as Pt and Pd. This gives a high loading of PGMs at the inlet end which is effective for exotherm generation when contacted by additional hydrocarbon fuel. The impregnation composition used does not contain a refractory metal oxide support like a conventional washcoat.

As was shown in Example 5 and 6 of WO 2020260669 and Examples 9 and 10 of WO2021074605, the existing DOC design without a guard bed was found to be more prone to catalyst poisoning from phosphorus and/or zinc. This is because the highly active Pt and Pd is the first part of the catalyst to encounter the phosphorous in the exhaust gases and this means that the phosphorous and/or zinc can directly impede the active sites of the Pt and Pd metals, whether by selective or non-selective poisoning.

The same Examples show that when an inert washcoat guard bed layer was coated across the highly loaded front zone of PGMs, alternatively a washcoat layer including a low loading of PGMs, there was some improvement in catalyst poison-resistance, but a consequent reduction in aged exotherm performance.

The inventors have now found that they can substitute the high loading of Pt and/or Pd applied by surface impregnation disclosed in Applicant's WO2020260669 and WO2021074605 for an underlying washcoat layer. The underlying washcoat layer extends from the inlet end for a portion only of a total axial length of a flow-through monolith substrate and has a high loading of PGMs and an overlying washcoat layer extends beyond a downstream end of the underlying washcoat layer. However, because the highly loaded underlying washcoat layer is disposed under another washcoat it is shielded from catalyst poisoning. The inventors have further discovered that adjusting the porosity of the overlying washcoat layer maintains the catalyst poisoning resistance with a reduced effect on the exotherm generation performance.

The present invention relates to an oxidation catalyst article, preferably a diesel oxidation catalyst (DOC) article. By a catalyst article it is meant a single component for an exhaust gas treatment system. These are also sometimes referred to as "bricks".

The article comprises a flow-through substrate having an inlet end and an outlet end and a longitudinal (axial) length extending therebetween. The flow-through monolith substrate has a plurality of channels extending between the inlet end and the outlet end. The plurality of channels extends in the longitudinal direction and provide a plurality of inner surfaces (e.g. the surfaces of the walls defining each channel). Each of the plurality of channels has an opening at the inlet end and an opening at the outlet end.

For the avoidance of doubt, the flow-through monolith substrate is not a wall-flow filter.

The channels may be of a constant width and each plurality of channels may have a uniform channel width. Preferably within a plane orthogonal to the longitudinal direction, the monolith substrate has from 46.5 to 139.5 cells per square centimetre (300 to 900 channels per square inch), preferably from 62 to 124 (400 to 800). For example, on the first face, the density of open first channels and closed second channels is from 93 to 108.5 cells per square centimetre (600 to 700 channels per square inch). The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the flow-through monolith substrate described herein is a single component (i.e. a single brick), nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo-aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

The article as described herein is provided with a number of washcoats and may therefore be best considered a zoned oxidation catalyst article. Each washcoat forms a distinct zone on the substrate and the zones may overlap as explained below. Washcoat compositions and their application is well known in the art.

There is provided a first washcoat which is provided extending from the inlet end of the substrate. The first washcoat extends up to 40% of the longitudinal length of the substrate, such as from 20 to 40% of the longitudinal length of the substrate. Preferably the first washcoat extends at least 15% of the longitudinal length of the substrate. The first washcoat can extend from the inlet end for 25 to 35% of the longitudinal length of the substrate. Preferably, the first washcoat extends 20 to 30% of the longitudinal length of the substrate. The technical effect of the preferred limitation is disclosed in Example 9.

There is provided a second washcoat extending from the inlet end. The second washcoat entirely overlaps the first washcoat. That is, the second washcoat forms a protective covering across the entirety of the first washcoat. In addition, the second washcoat desirably extends further along the length of the substrate as discussed below. That is, both the first and second washcoats start at the inlet end of the substrate and the second washcoat is longer than the first washcoat. The second washcoat contributes passive CO and HC oxidation.

Preferably the second washcoat is at least 40% of the longitudinal length of the substrate, and preferably up to 85% of the length. Preferably the second washcoat extends from 50 to 85% of the longitudinal length of the substrate. Preferably the second washcoat is 50 to 75% of the length of the substrate.

There is provided a third washcoat extending from the outlet end. The third washcoat does not overlap the first washcoat. That is, if the first washcoat is 35% of the longitudinal length from the inlet, then the third washcoat is 65% or less of the longitudinal length from the outlet. The third washcoat which forms a rear zone is intended to handle the competing NOx oxidation that desirably also needs to occur. The third washcoat typically has a lower PGM content and is more resistant to sintering due to the lower PGM content. That is, when the rear zone has a lower loading of PGMs, the particles of PGMs are more spaced out and less likely to sinter (or agglomerate) together. Using lower amounts of PGMs in the rear zone is a more efficient use of the PGMs.

Preferably the third washcoat is at least 25% of the longitudinal length of the substrate, and preferably up to 60% of the length. Preferably the third washcoat extends from 60 to 20% of the longitudinal length of the substrate. Preferably the third washcoat is 50 to 30% of the length of the substrate.

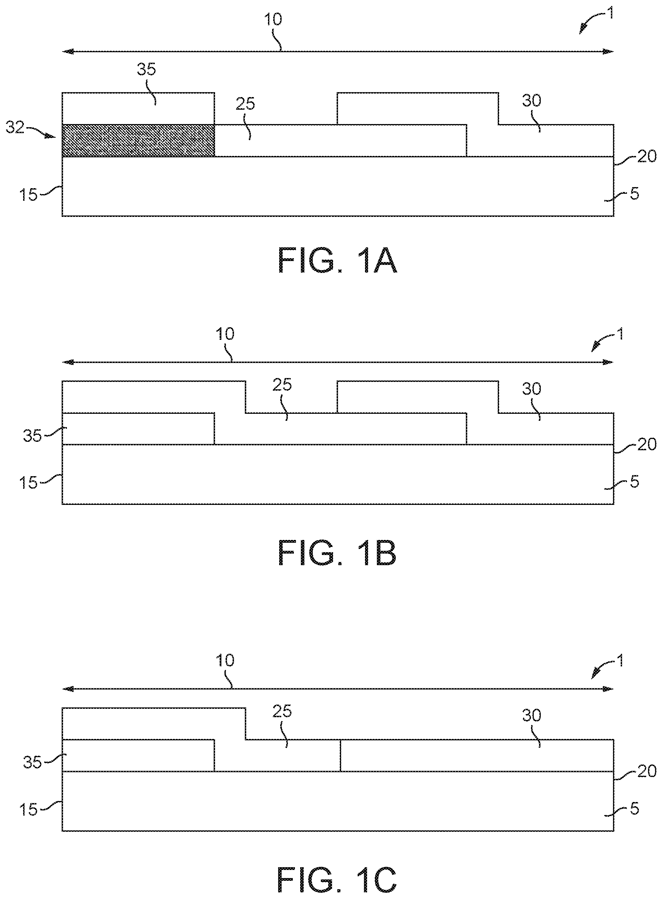

In embodiments illustrated by Figure 1B, the second washcoat extends for up to 85% of the longitudinal length of the substrate and the third washcoat overlaps with the second washcoat, preferably for 10 to 30% of the longitudinal length of the substrate.

Alternatively, in embodiments illustrated by Figure 1C, the second washcoat meets with, but does not intentionally overlap with, the third washcoat. In these embodiments, the second washcoat extends for at least 40% of the longitudinal length of the substrate and the third washcoat meets the second washcoat.

The second and third washcoats will generally meet or overlap as it is not preferred for there to be uncoated substrate. The third washcoat preferably overlaps on top of the second washcoat.

The first washcoat comprises a first platinum group metal composition on a first alumina support. The second washcoat comprises a second platinum group metal composition on a second alumina support. The third washcoat comprises a third platinum group metal composition on a third alumina support. Where any of these washcoats contain more than one different PGM, these may be provided on the same or different support particles. For example, a Pt and Pd-containing washcoat may be formed from a support provided with Pt and Pd, or a mix of washcoats, one having Pt and one have Pd. Each of the first, second and third platinum group metals preferably contains Pt, Pd or a combination thereof and preferably each of the first, second and third platinum group metals preferably consists of Pt, Pd or a combination thereof.

The support material in each washcoat comprises alumina which is a refractory metal oxide support material. The support material may further comprise silica, zirconia or ceria, or be provided as a composite oxide or a mixed oxide of alumina therewith. Mixed oxides or composite oxides include silica-alumina. Preferably, the refractory metal oxide support material does not comprise ceria or a mixed oxide or composite oxide including ceria. More preferably, the refractory oxide is selected from the group consisting of alumina and silica-alumina.

The inclusion of a dopant may stabilise the alumina or promote catalytic reaction of the supported platinum group metal. Typically, the dopant may be selected from the group consisting of zirconium (Zr), titanium (Ti), silicon (Si), yttrium (Y), lanthanum (La), praseodymium (Pr), samarium (Sm), neodymium (Nd), barium (Ba) and an oxide thereof. In general, the dopant is different to the refractory metal oxide (i.e. the cation of the refractory metal oxide).

When the refractory metal oxide support material is doped with a dopant, then typically the refractory metal oxide support material comprises a total amount of dopant of 0.1 to 10 % by weight. It is preferred that the total amount of dopant is 0.25 to 7 % by weight, more preferably 2.5 to 6.0 % by weight. Preferably the dopant is silica, because oxidation catalysts comprising such support materials in combination with platinum group metals and alkaline earth metals promote oxidation reactions, such as CO and hydrocarbon oxidation.

The first washcoat has a total Pt and Pd loading of X g/L (gft⁻³). That is, the sum of any Pt which is present and the sum of any Pd which is present add together to give a value of X g/L (gft⁻³). For the avoidance of doubt, it is not required that both Pt and Pd are present. Preferably the first platinum group metal composition comprises Pt and Pd and preferably consists thereof.

The second washcoat has a total Pt and Pd loading of Y g/L (gft⁻³). That is, the sum of any Pt which is present and the sum of any Pd which is present add together to give a value of Y g/L (gft⁻³). For the avoidance of doubt, it is not required that both Pt and Pd are present. Preferably the second platinum group metal composition comprises Pt and Pd and preferably consists thereof.

The third washcoat has a total Pt and Pd loading of Z g/L (gft⁻³). That is, the sum of any Pt which is present and the sum of any Pd which is present add together to give a value of Z g/L (gft⁻³). For the avoidance of doubt, it is not required that both Pt and Pd are present. Preferably the third platinum group metal composition at least comprises Pt and preferably consists thereof.

In the oxidation catalyst article described herein, the Pt and Pd loadings in the first, second and third washcoats satisfy the requirements that the value of X is more than 1.5 times the value of Y and that the value of X is more than twice the value of Z. This can be expressed as 2Z<X>1.5Y. The Pt and Pd loadings in the first, second and third washcoats can satisfy the requirements that the value of X is more than twice the value of Y and that the value of X is more than twice the value of Z. This can be expressed as 2Z<X>2Y. Preferably 4Z<X>4Y. Preferably 10Y>X>4Y and/or preferably 20Z>X>4Z. These inequalities serve to demonstrate how the underlying first washcoat has a significantly higher PGM content than the other layers of the catalyst article.

Preferably Y≥Z and preferably Y>Z. This means that there is a lower concentration of PGMs in a rear zone which may be hotter after the exotherm generation, such that the PGMs are less likely to sinter. In some preferred embodiments Y>1.5Z, more preferably Y>2Z. The lower concentration in this rear zone may be optimal for NO₂ generation.

Preferably the first washcoat extends from the inlet end from 20 to 35% of the longitudinal length of the substrate. If the coating is too short then the exotherm benefits are not observed. Equally, if the coating is too long then an undue amount of PGMs are being used in the article and this is not cost-effective.

Preferably the substrate has a length of about 7.62 cm or about 10.16 cm (about 3 or about 4 inches) and wherein the first washcoat extends about 2.54 cm (about 1 inch) along the substrate. This represents the typical catalyst article size and dimensions suitable for current design constraints.

Preferably X is from 0.71 to 2.19 g/L (20 to 60 gft⁻³). This represents a high loading of PGMs in the first washcoat. Preferably the first platinum group metal composition comprises Pt and Pd in a first weight ratio of from 1:1 to 6:1, preferably 3:1 to 6:1, more preferably 2.5:1 to 5.5:1 and most preferably about 5:1. This can be seen from Example 7. In the prior art highly loaded front zone DOCs it is necessary to have relatively high levels of Pd to ensure that the exotherm performance is maintained. However, surprisingly, the inventors have found that there is no real change in performance across the ratios claimed. This gives much greater flexibility in production, depending on costs, and means that there are suitable ratios which have not previously been useful. Moreover, it has been found that a loading of about 5:1 (preferably including 4:1 and 6:1) of Pt:Pd leads to improved lower exotherm quench temperatures.

Preferably Y is from 0.18 to 0.71 g/L (5 to 20 gft⁻³). This represents a conventional loading of PGMs for an inlet zone washcoat in a DOC. Preferably the second platinum group metal composition comprises Pt and Pd in a second weight ratio of from 1:1 to 6:1 and preferably about 2:1, including 1:1 to 3:1.

Preferably Z is from 0.04 to 0.71 g/L (1 to 20 gft⁻³). This represents a conventional loading of PGMs for an outlet zone washcoat in a DOC. Preferably the third platinum group metal composition comprises Pt and, optionally, Pd and wherein, when Pd is present comprises Pt and Pd in a third ratio of 1:0≥2:1, preferably 1:0≥4:1. The higher ratio of Pt is optimised for the NO₂ production and there is less need for Pd as this zone is not responsible for exotherm generation. However, the presence of Pd in addition to barium in the third washcoat, particularly in the arrangement shown in Figure 1C (see Example 6).

The total loading of platinum group metal in the oxidation catalyst article can be from 0.35 to 1.59 g/L (10 to 45 gft⁻³). Within this parameter range, and the general platinum group metals loadings X, Y and Z, Applicant has found that it is possible to design lower total platinum group metal loading embodiments of the arrangements shown in Figures 1B and 1C as well as higher total platinum group metal loading embodiments.

Lower total platinum group metal embodiments of the arrangements shown in Figures 1B and 1C can have a total platinum group metal loading of 0.35 to < 0.71 g/L (10 to < 20 gft⁻³), optionally wherein one, two or all of the following apply: (i) X is from 0.71 to 1.41 g/L (20 to 40 gft⁻³); (ii) Y is from 0.07 to 0.35 g/L (2 to 10 gft⁻³); (iii) Z is from 0.04 to 0.35 g/L (1 to 10 gft⁻³).

As can be seen in Examples 8 and 11, exotherm quench temperature can be undesirably impacted where the value of X is too low, but at the claimed lower values of X, exotherm quench temperature is improved by using higher washcoat loadings for the first washcoat, preferably from 18.3 to 36.6 g/L (0.3 to 0.6 g/in³).

Higher total platinum group metal embodiments of the arrangements shown in Figures 1B and 1C can have a total platinum group metal loading of 0.71 to 1.59 g/L (20 to 45 gft⁻³), optionally wherein one, two or all of the following apply: (i) X is from 1.06 to 2.19 g/L (30 to 60 gft⁻³); (ii) Y is from 0.18 to 0.71 g/L (5 to 20 gft⁻³); (iii) Z is from 0.07 to 0.71 g/L (2 to 20 gft⁻³).

The washcoat loading in the second washcoat is from 15.26 to 106.8 g/L (0.25 to 1.75 g/in³), preferably 45.8 to 91.5 g/L (0.75 to 1.5 g/in³). The higher washcoat loadings can accommodate the pore former feature to improve the porosity of the second washcoat, which Applicant has found improves exotherm quench temperature and hydrocarbon slip.

Applicant has found that exotherm quench temperature can also be improved by the addition of particulate cellulose pore former to the second washcoat slurry before it is coated onto the substrate. The pore former is then removed during calcination, leaving behind a more open pore structure and, consequently, porosity. Preferably the resulting second washcoat has a greater porosity than the third washcoat, preferably wherein the pore volume per unit volume of the second washcoat is at least 10% greater than pore volume per unit volume of the third washcoat, preferably at least 20%. The third washcoat is generally intended to be a conventional washcoat, whereas the second washcoat is intentionally made more porous to increase access for the exhaust gases through to the underlying first washcoat. Pore volume may be measured by a variety of techniques, including inspection of micrographs (as shown in the figures annexed hereto) and the technique of FIB-SEM (Focused Ion Beam-Scanning Electron Microscopy (see e.g. EP 3263214 A1). The technical effect of addition of porosity in the second washcoat is shown in Examples 10, 11 and 12.

Preferably the second washcoat comprises barium. The barium helps to boost the performance of the PGMs in the second washcoat.

It is preferred that the first washcoat also comprises barium. The technical effect of this is shown in Example 5.

The catalyst article designs shown in Figures 1B and 1C can be obtained using different second and third washcoat longitudinal (axial) lengths. For example, the second washcoat can extend from 50 to 85% of the longitudinal length of the substrate, and/or the third washcoat extends from 60 to 20% of the longitudinal length of the substrate, and/or the second and third washcoats overlap for 10 to 30% of the longitudinal length of the substrate.

The third platinum group metal composition can comprise Pt and Pd in a third ratio of 1:0≥4:1. However, Applicant has found that it is preferable to include palladium in the third catalyst when the third platinum group metal comprises palladium, particularly - though not exclusively - where there is no intentional overlap of the second and third washcoats. This can be seen from Example 6.

Where the first, second or third washcoat contains barium, the barium is present in an amount of from 0.71 to 5.30 g/L (20 to 150 gft⁻³), preferably 1.77 to 4.41 g/L (50 to 125 gft⁻³).

According to another aspect there is provided an exhaust gas treatment system comprising the oxidation catalyst article as described therein.

Preferably the oxidation catalyst article is upstream of a catalysed soot filter (CSF) and/or a Selective catalytic reduction catalyst (SCR), preferably wherein the oxidation catalyst article is upstream of a CSF which is itself upstream of an SCR. These components benefit from the provision of NO₂ generation on the DOC upstream as discussed above. The form and nature of a CSF and an SCR are well known in the art.

According to another aspect there is an apparatus comprising a diesel engine and the exhaust gas treatment system as described herein, wherein the oxidation catalyst article is arranged in use to be the first catalyst article contacted by exhaust gases leaving the diesel engine. As will be appreciated, P-poisoning is a particular issue right next to the engine due to P in the oil. Consequently, the benefits of the invention are best seen in this configuration where the risks of P-poisoning are most pronounced.

According to a further aspect there is provided a method for the manufacture of the oxidation catalyst article as described herein, the method comprising:
1) providing a flow-through substrate;
2) providing first, second and third washcoat suspensions each comprising an alumina support;
3) washcoating the washcoat suspensions onto the substrate; and
4) calcining the coated substrate;
wherein the pre-calcined second washcoat comprises an organic pore-former which is decomposed in the calcination step, wherein the organic pore-former provides at least 10wt%, preferably 20 to 45wt%, relative to the weight of the alumina support in the second washcoat suspension. Applicant has found that if the quantity of pore former added is too high, the resulting washcoat can be susceptible to undesirable cracking.

It is well known that when preparing a washcoat it is possible to include further ingredients which are conventional in forming washcoat slurries. These include one or more of a binder and a thickening agent. Binders may include, for example, an oxide material with small particle size to bind the individual insoluble particles together in washcoat slurry. The use of binders in washcoats is well known in the art. Thickening agents may include, for example, a natural polymer with functional hydroxyl groups that interacts with insoluble particles in washcoat slurry. It serves the purpose of thickening washcoat slurry for the improvement of coating profile during washcoat coating onto substrate. It is usually burned off during washcoat calcination. Examples of specific thickening agents / rheology modifiers for washcoats include glactomanna gum, guar gum, xanthan gum, curdlan schizophyllan, scleroglucan, diutan gum, Whelan gum, hydroxymethyl cellulose, carboxymethyl cellulose, hydroxyethyl cellulose, methyl cellulose, methyl hydroxyethyl cellulose, methyl hydroxypropyl cellulose and ethyl hydroxycellulose.

However, what is unusual in the present method is the significant levels of the particulate organic pore-former which is present. The organic pore-former provides at least 20wt%, preferably 30 to 50wt%, relative to the weight of the alumina support in the second washcoat suspension. Preferably the organic pore former is about 40wt% of the pre-calcined second washcoat.

It should be appreciated that the amount by weight of the pre-calcined second washcoat substantially excludes the supporting solvent of the washcoat.

Methods of washcoating are well known in the art. The method typically involves a step of applying the washcoat slurry to at least a portion of the substrate to form a washcoated substrate. Disposing the slurry on a substrate may be carried out using techniques known in the art. Typically, the slurry may be poured into the inlet of the substrate using a specific moulding tool in a predetermined amount, thereby disposing the loaded support material on the substrate. As discussed in more detail below, subsequent vacuum and/or air knife and/or and drying steps may be employed during the disposition step. A preferred coating method is disclosed in Applicant's WO1999/047260A1.

The method further comprises calcining the washcoated substrate to form a diesel oxidation catalyst (DOC) article. This may desirably be formed multiple times between each washcoat layer application and formation step. The term "calcine", or "calcination", means heating the material in air or oxygen. This definition is consistent with the IUPAC definition of calcination. (IUPAC. Compendium of Chemical Terminology, 2nd ed. (the "Gold Book"). Compiled by A. D. McNaught and A. Wilkinson. Blackwell Scientific Publications, Oxford (1997). XML on-line corrected version: http://goldbook.iupac.org (2006-) created by M. Nic, J. Jirat, B. Kosata; updates compiled by A. Jenkins. ISBN 0-9678550-9-8. doi: 10.1351/goldbook). The temperatures used in calcination depend upon the components in the material to be calcined and generally are between about 400°C to about 900°C for approximately 1 to 8 hours. In some cases, calcination can be performed up to a temperature of about 1200°C. In applications involving the processes described herein, calcinations are generally performed at temperatures from about 400°C to about 700°C for approximately 1 to 8 hours, preferably at temperatures from about 400°C to about 650°C for approximately 1 to 4 hours. The calcining step in air serves to burn out the organic pore-former and this leaves the voids in the remaining washcoat layer.

Calcining is typically carried out in an oven or furnace, more typically a belt or static oven or furnace, typically in hot air at a specific flow from one direction. The calcining may also comprise an initial drying step. The drying and calcination steps may be continuous or sequential. For example, a separate washcoat may be applied after the substrate is already washcoated and dried with a previous washcoat. A washcoated substrate can also be dried and calcined using one continuous heating program if coating is completed. As a result of the heating (calcination), the substrate is typically substantially free of organic compounds, more typically completely free of organic compounds.

Following the heating step, the substrate is typically cooled, more typically to room temperature. The cooling is typically carried out in air with or without cooling agent/media, typically without cooling agent.

### Definitions

As used herein, the singular form of "a", "an" and "the" include plural references unless the context clearly dictates otherwise.

The use of the term "comprising" is intended to be interpreted as including such features but not excluding other features and is also intended to include the option of the features necessarily being limited to those described. In other words, the term also includes the limitations of "consisting essentially of" (intended to mean that specific further components can be present provided they do not materially affect the essential characteristic of the described feature) and "consisting of" (intended to mean that no other feature may be included such that if the components were expressed as percentages by their proportions, these would add up to 100%, whilst accounting for any unavoidable impurities), unless the context clearly dictates otherwise.

As used herein, the term "on" is intended to mean "directly on" such that there are no intervening layers between one material being said to be "on" another material. Spatially relative terms, such as "below", "beneath", "lower", "above", "upper" and the like, may be used herein for ease of description to describe one element or feature's relationship to another element(s) or feature(s). It will be understood that the spatially relative terms are intended to encompass different orientations of the catalyst in use or operation in addition to the orientation depicted in the figures.

### Figures

The invention will now be described further in the following figures. In which:
Figure 1A shows a prior art configuration of a DOC, similar to Example 6.4 in Applicant's WO2020/260669A1;
Figure 1B shows a configuration of a DOC as described herein;
Figure 1c shows a configuration of an DOC as described herein;
Figures 2 and 3 show SEM images of the washcoat structure on the walls of a substrate as described herein; and
Figure 4 is a graph plotting exotherm quench temperature as a function of particulate cellulose pore former loading, referenced in Example 10.

Figure 1A shows a schematic in cross-section along a prior art oxidation catalyst article 1, similar to Applicant's Example 6.4 in WO2020/260669A1. The oxidation catalyst article 1 comprises a honeycomb flow-through substrate 5. The substrate 5 has walls of channels on which different catalyst zones are formed. The substrate 5 has a longitudinal length 10 extending from an inlet end 15 to an outlet end 20 of the substrate 5.

The oxidation catalyst article 1 in Figure 1A is a comparative prior art configuration. This is provided with a first washcoat 25 extending from the inlet end 15 and directly on the substrate. The first washcoat 25 comprises Pt and Pd in a 2:1 ratio supported on a particulate alumina support, such as alumina doped with 5wt% silica. The first washcoat 25 extends about 75% of the longitudinal length 10.

There is provided a second washcoat 30 extending from the outlet end 20 of the substrate 5. This second washcoat extends about 50% of the longitudinal length 10. The second washcoat 30 comprises Pt as the only PGM and is supported on a particulate alumina, such as alumina doped with 5wt% silica. The second washcoat 30 overlaps the first washcoat 25 for about 25% of the longitudinal length 10.

The first washcoat 25 is impregnated with a PGM-rich aqueous solution of platinum and palladium salts (i.e. no support material) applied from the inlet end 15 of the substrate, so that the alumina support of the first washcoat also supports the additional PGM-rich impregnation. The first washcoat 25 is impregnated to a depth of 35% of the longitudinal length 10. The zone of impregnation is shown in Figure 1A by the area of shading 32.

A third washcoat 35 comprising a particulate alumina support, such as alumina doped with 5wt% silica, is applied from the inlet end 15 of the substrate to a depth of 35% of the longitudinal length 10 so that it overlaps with the impregnated zone 32.

In use the high PGM loading of the impregnated zone 32 gives excellent exotherm generation at relatively low inlet exhaust gas temperatures, i.e. the lowest temperature before exotherm generation fails, also known as exotherm extinction or "quench". The presence of the third washcoat 35 does increase the inlet exhaust gas temperature at which exotherm generation fails vs. an equivalent catalyst without the third washcoat 35, caused by mass transfer limitations preventing hydrocarbon fuel accessing the PGM-rich impregnated zone. However, the third washcoat 35 does protect the PGM-rich impregnated zone 32 from phosphorus poisoning, i.e. an equivalent catalyst without the third washcoat 35 has a higher exotherm generation fail inlet temperature than the catalyst having the third washcoat 35.

Figure 1B shows a schematic in cross-section along an oxidation catalyst article 1. The oxidation catalyst article 1 comprises a flow-through substrate 5. The substrate 5 has walls of channels on which different catalyst zones are formed. The substrate 5 has a longitudinal length 10 extending from an inlet end 15 to an outlet end 20 of the substrate 5.

The oxidation catalyst article 1 in Figure 1B is in accordance with the invention described herein. This is provided with a first washcoat 35 is applied from the inlet end 15 of the substrate (generally 25 to 35% of the longitudinal length 10). This is PGM rich and contains a particulate alumina support, such as alumina doped with 5wt% silica.

A second washcoat 25 is provided extending from the inlet end 15 and directly on the first washcoat 35 and the substrate. The second washcoat 25 fully covers the first washcoat 35. The second washcoat 25 comprises Pt and Pt in a 2:1 ratio supported on a particulate alumina support, such as alumina doped with 5wt% silica. The second washcoat 25 extends about 75% of the longitudinal length 10.

There is provided a third washcoat 30 extending from the outlet end 20 of the substrate 5. This extends about 50% of the longitudinal length 10. The third washcoat 30 comprises Pt as the only PGM and is supported on alumina, such as alumina doped with 5wt% silica. The third washcoat 30 overlaps the second washcoat 25, although they could have been applied in either order. The third washcoat 30 does not overlap the first washcoat 35.

In use the high PGM loading of the first washcoat 35 gives excellent exotherm performance. Since the PGM-content of the first washcoat 35 is covered by the second washcoat 25, the inventors have found that it is resistant to Phosphorus-poisoning. As is evident from the results of Examples 1-4 shown in Table 1, the aged and Phosphorus-aged performance exceeds that of the prior art in Example 6.4 in Applicant's WO2020/260669A1 with better hydrocarbon slip performance.

Figure 1C shows a schematic in cross-section along an oxidation catalyst article 1. The oxidation catalyst article 1 comprises a flow-through substrate 5. The substrate 5 has walls of channels on which different catalyst zones are formed. The substrate 5 has a longitudinal length 10 extending from an inlet end 15 to an outlet end 20 of the substrate 5.

The oxidation catalyst article 1 in Figure 1C is in accordance with the invention described herein. This is provided with a first washcoat 35 is applied from the inlet end 15 of the substrate (generally 25 to 35% of the longitudinal length 10). This is PGM rich and contains a particulate alumina support, such as alumina doped with 5wt% silica.

A second washcoat 25 is provided extending from the inlet end 15 and directly on the first washcoat 35 and the substrate. The second washcoat 25 fully covers the first washcoat 35. The second washcoat 25 comprises Pt and Pt in a 2:1 ratio supported on an alumina support. The second washcoat 25 extends about 50% of the longitudinal length 10. The second washcoat 25 is formed with about 40wt% of an organic pore former (not shown) by weight of the pre-calcined washcoat, such that the second washcoat 25 is highly porous.

There is provided a third washcoat 30 extending from the outlet end 20 of the substrate 5. This extends about 50% of the longitudinal length 10. The third washcoat 30 comprises Pt as the only PGM and is supported on alumina. The third washcoat 30 does not overlap the second washcoat 25, although they could have been applied in either order. The third washcoat 30 does not overlap the first washcoat 35.

In use the high PGM loading of the first washcoat 35 gives excellent exotherm performance. Since the PGM-content of the first washcoat 35 is covered by the second washcoat 25, the inventors have found that it is resistant to P-poisoning. In view of the high porosity of the second washcoat 25, the exhaust gases are better able to contact the PGM rich first washcoat 35 and the P-poisoning occurs primarily on the surface, more distant from the PGMs with the increased thickness of the second washcoat 25 (same material, higher porosity, leads to a greater thickness). This leads to further improvements in the fresh and aged performance of the article 1 formed in this way.

### EXAMPLES

The invention will now be illustrated by the following non-limiting examples. The articles disclosed in the Examples were prepared according to the method disclosed in Applicant's WO 1999/047260A1.

### Example 1 (Comparative)

The following comparative Example is similar to Applicant's Example 6.4 in WO 2020/260669A1 and has the construction shown in Figure 1A.

A cylindrical cordierite flow-through honeycomb monolith substrate, i.e. channels open at both ends) of (400 cells per square inch) and having dimensions of length 10.16 cm (4 inches) x a diameter of 26.67 cm (10.5 inches) was coated with a first catalyst washcoat slurry containing aqueous salts (as nitrates) of platinum and palladium, barium acetate and a 5wt% silica-doped alumina particulate support to 75% of the axial length of the substrate from the inlet end. The resulting substrate coated with the first catalyst washcoat slurry was then dried in a conventional oven for 1 hour at 100°C to remove excess water and other volatile species. A second catalyst washcoat slurry was prepared comprising Pt nitrate salts only (1:0) and 5wt% silica-doped alumina particulate support (no barium). This second slurry was coated for 50% of the axial length of the substrate from the outlet end. The resulting substrate coated with the second catalyst washcoat slurry was then dried in a conventional oven for 1 hour at 100°C to remove excess water and other volatile species and then the dried part was calcined for 1 hour at 500°C to decompose the platinum and palladium salts and fix the platinum and palladium to the silica-doped alumina support.

The concentrations of platinum salts, palladium salts and barium acetate used in the first and second catalyst washcoat slurries was selected so that the calcined product had a first catalyst washcoat layer having a 2:1 Pt:Pd weight ratio and 2.83 g/L (80 gft⁻³) barium; and the second catalyst washcoat layer had a Pt:Pd weight ratio of 1:0.

A first catalyst washcoat zone was obtained by impregnating the first catalyst washcoat layer with a solution of platinum and palladium salts sufficient to achieve an additional 1:1 weight ratio of Pt and Pd over 25% of the axial length of the substrate at an additional total PGM loading (i.e. additional to the first catalyst washcoat) of 1.24 g/L (35 gft⁻³). The resulting substrate in which the first catalyst washcoat layer was impregnated was then dried in a conventional oven for 1 hour at 100°C to remove excess water and other volatile species and then the dried part was calcined for 1 hour at 500°C to decompose the platinum and palladium salts and fix the platinum and palladium to the silica-doped alumina support.

A further catalyst washcoat slurry of 5wt% silica-doped alumina was coated over the first catalyst washcoat zone at a washcoat loading of 91.5 g/L (1.5 gin⁻³) and for a total of 30% of the substrate axial length from the inlet end of the substrate, i.e. the first catalyst washcoat zone was completely covered with the washcoat overlayer of a silica-doped alumina "guard bed".

The composite oxidation catalyst as a whole had a total platinum group metal loading of 0.53 g/L (15 gft⁻³) and a Pt:Pd weight ratio of 1.45:1. A schematic representation of the catalyst prepared according to this Example is shown in Figure 1A.

The product of Comparative Example 1 was oven-aged in air at 650°C for 50 hours.

### Example 2 (not according to the invention)

A cylindrical cordierite flow-through honeycomb monolith substrate having dimensions of length 10.16 cm (4 inches) x a diameter of 26.67 cm (10.5 inches) was coated with a first catalyst washcoat slurry containing aqueous salts (as nitrates) of 1.24 g/L (35 g/ft³) platinum and palladium at a weight ratio of 3:1 and a 5wt% silica-doped alumina particulate support at a washcoat loading of 30.5 g/L (0.5 gin⁻³) to create a layer 25% of the axial length of the substrate from the inlet end. The resulting substrate coated with the first catalyst washcoat layer was then dried in a conventional oven for 1 hour at 100°C to remove excess water and other volatile species and calcined and then the dried part was calcined for 1 hour at 500°C to decompose the platinum and palladium salts and fix the platinum and palladium to the silica-doped alumina support.

A second catalyst washcoat slurry was prepared containing aqueous salts (as nitrates) of platinum and palladium, barium acetate and a 5wt% silica-doped alumina particulate support and coated to 75% of the axial length of the substrate from the inlet end, i.e. the first catalyst washcoat layer was completely covered with the second catalyst washcoat layer. The resulting substrate coated with the first and second catalyst washcoat layers was then dried in a conventional oven for 1 hour at 100°C to remove excess water and other volatile species.

A third catalyst washcoat slurry was prepared comprising Pt nitrate salts only (1:0) and 5wt% silica-doped alumina particulate support (no barium). This third slurry was coated to form a layer extending for 50% of the axial length of the substrate from the outlet end, i.e. overlapping the second catalyst washcoat layer by an axial length of 25%, but not the first catalyst washcoat layer. The resulting substrate coated with the third catalyst washcoat slurry was then dried in a conventional oven for 1 hour at 100°C to remove excess water and other volatile species and then the dried part was calcined for 1 hour at 500°C to decompose the platinum and palladium salts and fix the platinum and palladium to the silica-doped alumina support.

The composite oxidation catalyst as a whole had a total platinum group metal loading of 0.53 g/l (15 gft⁻³) and a Pt:Pd weight ratio of 2.81:1.

A schematic representation of the catalyst prepared according to this Example is shown in Figure 1B.

The product of Example 2 was oven-aged in air at 650°C for 50 hours.

### Comparison of construction of comparative Example 1 and Example 2.

The catalyst of Example 2 uses a lower washcoat loading, i.e. of the particulate silica-doped alumina etc., to support the first washcoat layer compared with the guard bed used to protect the impregnated zone in comparative Example 1 (30.5 g/L to 91.5 g/L (0.5 g/in³ vs. 1.5 g/in³). A lower washcoat loading reduces the backpressure in the part, because higher washcoating used in the guard bed creates a thicker coating on the substrate channel walls. Additionally, using less silica-doped alumina is a more efficient use of resources and reduces the cost of the resulting product. Additionally, it will be noted that the first washcoat layer of Example 2 does not include barium as a promoter, whereas the impregnated catalyst zone of comparative Example 1 combines the higher platinum group metal loading with the barium from the first catalyst washcoat. As can be seen below, Applicant has found that the addition of barium to the first washcoat layer of Example 2 improves exotherm.

### Example 3 - "Continuous exotherm" test

A "continuous exotherm" test was conducted on the aged comparative Example 1 and aged Example 2 samples were performed using a laboratory bench-mounted diesel engine. The engine was fuelled with EUVI B7 fuel (7% Bio fuel) for both engine operation and exhaust gas hydrocarbon enrichment (exotherm generation), running at 2200 rpm and was fitted with an exhaust system including exhaust piping and demountable canning into which each of the catalyst samples could be inserted for testing with the inlet end oriented to the upstream side. The engine was a 7-litre capacity EUV 6-cylinder engine, producing 235 kW at 2500 rpm and the exhaust system included a "7^{th} injector" disposed to inject hydrocarbon fuel directly into the exhaust gas piping downstream from the engine manifold and upstream from the catalyst sample to be tested. This injector is named the "7^{th} injector" because it is additional to the six fuel injectors associated with the cylinders of the engine. Thermocouples were located at the inlet to the catalyst samples were inserted at various axial locations along the centre line of the substrate monolith of each catalyst sample.

Each sample was conditioned at an inlet temperature of 490°C for 20 minutes, followed by a fast cool-down to an inlet temperature of 320°C at which the catalyst was held at 375 kg/h flow rate for 10 minutes. Hydrocarbon injection via the 7^{th} injector was then begun at a rate to achieve an exotherm generating 600°C at substrate outlet. This exotherm was maintained at steady state for 5 minutes. A hydrocarbon oxidation catalyst light-out temperature ramp-down was then begun by continuously adjusting the engine load to achieve a 1°C inlet temperature drop per minute at a flow rate of 720 kg/h. The exhaust gas temperature at the substrate inlet when the exhaust gas temperature at the substrate outlet was at or below 500°C was recorded. This temperature is also referred to as the "quench" temperature, i.e. the inlet exhaust gas temperature at and below which exotherm generation is considered to be "quenching". Additionally, the exhaust gas temperature at the substrate inlet was recorded when hydrocarbon slip detected at the substrate outlet was at 1000 ppm C₃ or above. The results (referred to as "pre-phosphorus aging exotherm quench temperature (°C)" and "pre-aging with 1000ppm HC-slip") are shown in Table 1 below.

### Example 4 - Phosphorus and/or Zinc Poisoning Assessment - Sample Testing

The aged samples of comparative Example 1 and Example 2 were canned together in parallel in a proprietary canning arrangement and the canned substrates were inserted into an exhaust system of a laboratory bench-mounted 16 litre heavy-duty diesel engine certified to the Euro 2 emission standard running MK1 fuel to which had been mixed a ZDTP fuel additive to a 1750 ppm concentration. The substrates were then engine aged using the following cycle, which had been calculated to expose the canned substrates as a whole to 0.5 g ZDTP per litre of catalyst substrate per cycle:
(i) 30 minutes "soak" at an engine load producing a steady state of 470°C substrate inlet temperature;
(ii) 15 minutes "soak" at an engine load producing a steady state of 210°C substrate inlet temperature followed by 15 minutes at an inlet temperature of 250°C and finally 10 minutes at an inlet temperature of 325°C; and
(iii) Steps (i) and (ii) were repeated six (6) times.

The samples were then decanned and each was tested in turn using the engine and procedure described in Example 3. The results (referred to as "post-phosphorus aging exotherm quench temperature (°C)" and "post-phosphorus aging with 1000ppm HC-slip") are shown in Table 1 below. The phosphorus ageing is intended to replicate end-of-vehicle-life exposure to phosphorus and zinc from engine lubricant and other catalyst poisons. Under Euro VI legislation, for N3 > 16 tonne and M3 Class III, and Class B > 7.5 tonne this can be up to 700,000km of 7 year's exposure.

**Table 1**

| | **Pre-phosphorus aging exotherm quench temperature (°C)** | **Pre-phosphorus aging with 1000ppm HC-slip (°C)** | **Post-phosphorus aging exotherm quench temperature (°C)** | **Post-phosphorus aging with 1000ppm HC-slip (°C)** |
|---|---|---|---|---|
| Comparative Example 1 | 253 | 269 | 265 | 286 |
| Example 2 | 250 | 260 | 261 | 275 |

With these data, it can be seen that the lower the catalyst substrate inlet temperature at which exotherm is considered to be quenching or extinguishing the better.

### Example 5 - The effect of including barium in the "underlayer" of the catalyst

Two products similar to Example 2 were prepared with the following differences compared with the Example 2 product:
(i) The first washcoat layer was coated from the inlet end to an axial length of the substrate of 25% at a washcoat loading of 21.4 g/L (0.35 g/in³) and a PGM loading of 1.24 g/L (35 g/ft³) at a 5:1 Pt:Pd weight ratio; and
(ii) The second washcoat layer was coated from the inlet end to an axial length of 50% instead of 75%, i.e. the third washcoat layer coated to 50% of the axial length of the substrate met in middle with the second washcoat layer.

The total platinum group metal loading of each Example 5 substrate was 0.49 g/L (14 g/ft³) and the Pt:Pd weight ratio was 5.49:1.

A schematic representation of the catalyst prepared according to this Example is shown in Figure 1C. In addition to the above features, an Example 5A included no additional barium in the first washcoat layer, whereas Example 5B included 0.71 g/L (20 g/ft³) barium.

The two catalysts were tested according to the methods described in Examples 3 and 4 and the results are shown in Table 2 below.

**Table 2**

| | **Pre-phosphorus aging exotherm quench temperature (°C)** | **Pre-phosphorus aging with 1000ppm HC-slip (°C)** | **Post-phosphorus aging exotherm quench temperature (°C)** | **Post-phosphorus aging with 1000ppm HC-slip (°C)** |
|---|---|---|---|---|
| Example 5A | 246.9 | 270 | 267.9 | 296 |
| Example 5B | 241.5 | 263 | 267.5 | 284 |

It can be seen from the results shown in Table 2 that the addition of barium in the first washcoat (under) layer on the inlet improves exotherm quench for a significant period of a full vehicle life. Additionally, it can be seen that the addition of barium in the first washcoat (under) layer on the inlet improves hydrocarbon slip in the post-phosphorus aged state.

### Example 6 - Comparison of Figure 1B and 1C embodiments including Pd and barium in the rear washcoat layer

Three Examples were prepared. A first Example (Example 6A) was similar to Example 2, i.e. according to Figure 1B, wherein the first washcoat layer was coated from the inlet end to an axial length of the substrate of 25% at a washcoat loading of 21.4 g/L (0.35 g/in³) and a PGM loading of 1.24 g/L (35 g/ft³) at a 5:1 Pt:Pd weight ratio (total Pt:Pd weight ratio on the substrate as a whole was 3.67:1).

A second Example (Example 6B) was similar to Example 5A (no barium in the first washcoat layer; Pt only (no palladium) and no barium in the third washcoat layer), i.e. according to Figure 1C, wherein the first washcoat layer was coated from the inlet end to an axial length of the substrate of 25% at a washcoat loading of 21.4 g/L (0.35 g/in³) and a PGM loading of 1.24 g/L (35 g/ft³) at a 5:1 Pt:Pd weight ratio (total Pt:Pd weight ratio on the substrate as a whole was 5:1).

A third Example (Example 6C) was the same as Example 5A, i.e. except in that the third washcoat layer, i.e. the outlet end layer, included palladium in addition to platinum at a Pt:Pd weight ratio 5:1, but at the same total PGM loading in the third washcoat layer of Example 6C as Example 6B, and barium at 2.83 g/L (80 g/ft³) (total Pt:Pd weight ratio on the substrate as a whole was 4:1).

The three catalysts were tested according to the methods described in Examples 3 and 4 and the results are shown in Table 3 below.

**Table 3**

| | **Pre-phosphorus aging exotherm quench temperature (°C)** | **Post-phosphorus aging exotherm quench temperature (°C)** |
|---|---|---|
| Example 6A | 252.7 | 263.5 |
| Example 6B | 254.6 | 269.9 |
| Example 6C | 248.0 | 260.8 |

It can be seen from the results shown in Table 3 that the addition of palladium and barium to the third washcoat (outlet end) layer improves exotherm quench temperature.

### Example 7 - Study of platinum to palladium weight ratio in underlying layer

A series of aged samples similar to Example 2 were prepared, i.e. according to Figure 1B, wherein the first washcoat layer was coated from the inlet end to an axial length of the substrate of 25% at a washcoat loading of 21.4 g/L (0.35 g/in³) and a PGM loading of 1.24 g/L (35 g/ft³) wherein the platinum to palladium weight ratio in the first washcoat layer was adjusted at a constant total PGM loading in the first washcoat layer. Oven-aging was done in air at 650°C for 50 hours. Continuous exotherm tests were conducted as set out in Example 3 and the ability of the catalyst to oxidise NO₂ was also assessed. The results are shown in Table 4. No phosphorus aged data was done.

**Table 4**

| | **Pt:Pd weight ratio at a constant 1.24 g/L (35 g/ft³)** | **NO₂/NOₓ ratio at 325°C** | **Pre-phosphorus aging exotherm quench temperature (°C)** |
|---|---|---|---|
| Example 7A | 1:1 | 26.0 | 250.0 |
| Example 7B | 2:1 | 25.2 | 246.2 |
| Example 7C | 3:1 | 27.8 | 242.7 |
| Example 7D | 5:1 | 30.2 | 242.5 |
| Example 7E | 6:1 | 29.9 | 244.4 |

Surprisingly, there was no significant difference between the observed performance at 1:1 and 6:1. While the performance was broadly the same across the ratios, there was optimum performance shown at a ratio of 3:1 to 5:1, with the quench temperature being generally 3-7°C lower than at 1:1 and 6:1.

Further testing was then performed to look at ratios in excess of 6:1, including 10:1 and Pt-only. These higher ratios in excess of 10:1 started to show further increases in the exotherm quench temperatures.

Additionally, although there was no significant difference in aged NO₂ oxidation of the samples, the 3:1 to 5:1 ratio samples did retain more NO₂ activity and so - for the technical effect of aged NO₂ oxidation - these samples are also preferred.

### Example 8 - Study of washcoat loading of underlying layer

A series of aged samples similar to Example 2 were prepared, i.e. according to Figure 1B, wherein the first washcoat layer was coated from the inlet end to an axial length of the substrate of 25% at a washcoat loading of 21.4 g/L (0.35 g/in³) and a PGM loading of either 0.71 g/L (20 g/ft³) or 1.94 g/L (55 g/ft³), wherein the platinum to palladium weight ratio was maintained at a constant 3:1. Oven-aging was done in air at 650°C for 50 hours. Continuous exotherm tests were conducted as set out in Example 3 and the ability of the catalyst to oxidise NO₂ was also assessed. The results are shown in Table 5. No phosphorus aged data is reported.

**Table 5**

| **Total underlayer washcoat loading (g/L (g/in³))** | **Pre-phosphorus aging exotherm quench temperature (°C)** | |
|---|---|---|
| | **Underlayer PGM loading 0.71 g/L (20 g/ft³)/3:1** | **Underlayer PGM loading 1.94 g/L (55 g/ft³)/3:1** |
| 6.10 (0.1) | 277.5 | - |
| 12.2 (0.2) | 272.4 | 246.5 |
| 21.4 (0.35) | 264.9 | 242.9 |
| 30.5 (0.5) | 264.4 | 246.3 |
| 48.8 (0.8) | - | 244.3 |

It can be seen that for the lower PGM (0.71 g/L (20g/ft³)) loading data set, the exotherm quench temperature desirably reduces with increasing washcoat loading. However, for the higher PGM (1.94 g/L (55 g/ft³)) loading data set, there is little variation in the exotherm quench temperature. This suggests that there is a PGM concentration effect occurring at an upper surface of the calcined first washcoat (underlayer) for the lower PGM loadings that becomes apparent when there is sufficient support material, i.e. the silica-doped alumina, within which the PGM may wick to the surface. For this reason, for embodiments having a lower total substrate PGM loading, higher washcoat loadings in the first washcoat (inlet) underlayer are preferred.

All samples within each PGM loading data set showed similar activity for NO oxidation (NO₂/NOₓ) (%).

### Example 9 - Study of axial length of underlying layer at constant total substrate PGM loading of 0.53 g/L (15 g/ft³)

Two pairs of samples according to Figures 1B and 1C were prepared. A first pair (Examples 9A and 9B) were according to Figure 1B and Example 2, wherein the first washcoat layer loading was 21.4 g/L (0.35 g/ft³) at 5:1 Pt:Pd weight ratio, no barium. The total Pt:Pd weight ratio on the substrate as a whole was 3.67:1. In Example 9A, the axial length of the first washcoat layer on the substrate was 25%; and in Example 9B the axial length was 35%.

Similarly, a second pair of Examples 9C and 9D were prepared according to Figure 1C and Example 5, wherein the first washcoat layer loading was 21.4 g/L (0.35 g/ft³) at 5:1 Pt:Pd weight ratio, no barium. The total Pt:Pd weight ratio on the substrate as a whole was 5:1. In Example 9C, the axial length of the first washcoat layer on the substrate was 25%; and in Example 9D the axial length was 35%.

Oven-aging was done in air at 650°C for 50 hours. Continuous exotherm tests were conducted as set out in Example 3 and the ability of the catalyst to oxidise NO₂ was also assessed. The results are shown in Table 6.

**Table 6**

| | **Pre-phosphorus aging exotherm quench temperature (°C)** | **NO₂/NOx ratio at 300°C** | **Post-phosphorus aging exotherm quench temperature (°C)** |
|---|---|---|---|
| Example 9A (25% zone length) | 254.6 | 29.2 | 269.9 |
| Example 9B (35% zone length) | 257.9 | 32.6 | - |
| Example 9C (25% zone length) | 252.7 | 32.2 | 263.5 |
| Example 9D (35% zone length) | 260.3 | 29.2 | - |

It can be seen that for both the embodiments of Figure 1B and 1C, the shorter length of the first washcoat layer has a lower exotherm quench temperature. Applicant believes that this technical effect is because the platinum group metal in the first washcoat layer is more concentrated.

### Example 10 - Addition of particulate cellulose pore former to second catalyst washcoat (inlet) layer

Testing was performed to look at the effect of adding a particulate cellulose pore-former to increase the porosity of the washcoat overlying the PGM-rich inlet washcoat. Catalyst samples similar to Example 5 (i.e. as shown in Figure 1C) were prepared having an inlet washcoat extending for 25% of the axial substrate length from the inlet end. This had a 5:1 Pt:Pd ratio and a total PGM loading of 1.24 g/L (35 gft⁻³) and was supported on a silica-doped alumina support (Si 5%). Overlying this was a 50% axial length inlet coating having a 2:1 Pt:Pd ratio on a silica-doped alumina support at a washcoat loading of 85.4 g/L (1.4 g/in³), 61. 0 g/L (1.0 g/in³) and 30.5 g/L (0.5 g/in³). A non-overlapping rear zone was provided over 50% of the length which contained Pt only. The PGM total amount in each of the 50% length washcoats was the same at 0.22 g/L (6.3gft⁻³).

A series of samples at different particulate cellulose loadings for each of the samples having different washcoat loadings - corresponding to the second washcoat loading of Example 5 - was produced: one without pore-former, a second containing 20wt% of a particulate cellulosic pore-former (in the overlying inlet washcoat only) relative to the silica-doped alumina; and a third sample was produced containing 40wt% of a particulate cellulosic pore-former (in the overlying inlet washcoat only) relative to the silica-doped alumina. The cellulose pore former was burned out during the 500°C calcination step described in Example 5. All three catalyst samples at each second catalyst washcoat loading were oven-aged in air at 650°C for 50 hours. The substrates were tested according to the procedure described in Example 3 and the results for pre-phosphorus aged exotherm quench are shown in Table 7.

**NB.:** The exotherm quench values reported in this example are not directly comparable with those in Examples 11 and 12 because Table 7 reports the inlet temperature when the exhaust gas temperature at the substrate outlet is 500 Celsius and below, as described in Example 3 hereinabove. In practice, a number of thermocouples are inserted within the body of the substrate at radial positions and along the longitudinal length of the substrate. In Examples 11 and 12 below, the exotherm quench temperatures HC slip temperatures reported are higher than in Table 7 because the values set out in Table 8 and in Example 12 are of the inlet exhaust gas temperature when the first thermocouple anywhere in the substrate registers 500°C or below. This value is generally higher than the inlet exhaust gas temperature when the outlet temperature is at or below 500°C. However, all values reported in Table 7 were taken using the same methodology and so the Table 7 value reported are internally consistent, similarly for Example 11 and - separately - Example 12. The results for Examples 10, 11 and 12 should therefore be understood in this context.

**Table 7**

| | **Pre-phosphorus aging exotherm quench temperature (°C)** | | |
|---|---|---|---|
| | **Second washcoat layer loading 85.4 g/L (1.4 g/in³)** | **Second washcoat layer loading 61.0 g/L (1.0 g/in³)** | **Second washcoat layer loading 30.5 g/L (0.5 g/in³)** |
| 0wt% pore former | 250.1 | 252.7 | 248.0 |
| 20wt% pore former | 246.6 | 245.1 | 248.8 |
| 40wt% pore former | 239.8 | 241.8 | 243.4 |

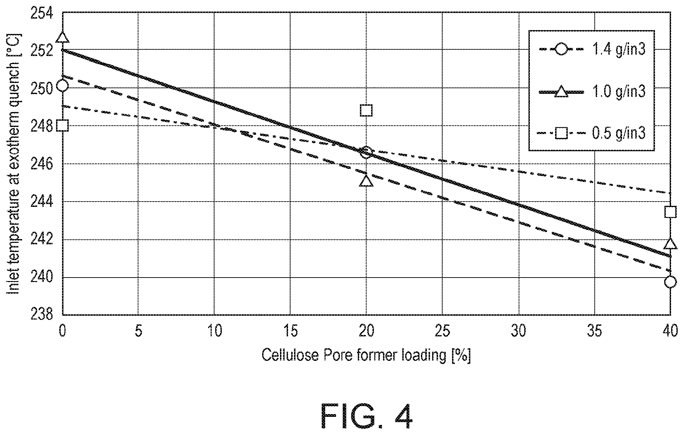

It can be seen from Table 7 that increasing the quantity of pore former addition has a positive effect on the exotherm quench temperature. These data are also plotted in Figure 4. However, the lowest exotherm quench temperature is achieved with the highest washcoat loading.

### Example 11 - Study of PGM loading in underlying layer at constant total substrate PGM loading under phosphorus aging

A series of samples having the construction of Example 5, i.e. Figure 1C was constructed at a constant total substrate PGM loading of 0.49 g/L (14 g/ft³). The axial length of the first washcoat layer was 35% and the washcoat loading was 21.4 g/L (0.35 g/in³). The second (inlet) catalyst washcoat loading was 85.4 g/L (1.4 g/in³). The platinum to palladium weight ratio in the inlet layer overlying the underlying layer remained constant throughout the series at 2:1; and the platinum to palladium loading in the underlying inlet layer also remained constant throughout the series at 5:1. The platinum loading in the outlet washcoat layer remained constant for all samples in the series. However, at one end of the series of samples, the PGM loading in the first (i.e. underlying) washcoat layer was 0.53 g/L (15 g/ft³) and at the other end of the samples the PGM loading was 1.24 g/L (35 g/ft³); the additional PGM was transferred to the first (underlying) inlet layer from the inlet layer overlying the underlayer. So, for the sample where the first washcoat layer PGM loading was 0.53 g/L (15 g/ft³), the PGM loading in the overlying inlet layer was 0.40 g/L (11.2 g/ft³); whereas for the sample where the first washcoat layer PGM loading was 1.24 g/L (35 g/ft³), the PGM loading in the overlying inlet layer was 0.10 g/L (2.8 g/ft³). Additionally, in one of the samples, cellulose pore former was included at 10wt% relative to the washcoat loading of the overlying (inlet) washcoat layer.

All samples in the series were oven-aged in air at 650°C for 50 hours. Phosphorus ageing was done as described in Example 4. Sample testing was done according to the methods described in Example 3.

**Table 8**

| **Total underlayer PGM loading (g/L (g/ft³))** | **Pre-phosphorus aging exotherm quench temperature (°C)** | **Pre-phosphorus aging with 1000ppm HC-slip (°C)** | **Post-phosphorus aging exotherm quench temperature (°C)** | **Post-phosphorus aging with 1000ppm HC-slip (°C)** |
|---|---|---|---|---|
| 0.53 (15) | 282.6 | 280.6 | - | - |
| 0.71 (20) | 270.7 | 269.7 | 295.8 | 286.6 |
| 0.88 (25) | 268.4 | 269.5 | 301.1 | 287.5 |
| 0.88 (25) (10wt% cellulose pore former in inlet overlying layer) | 261.0 | 266.6 | 275.4 | 273.7 |
| 1.24 (35) | 270.7 | 274.8 | 291.7 | 280.84 |

It can be seen from the results in Table 8 that transfer of PGM from the overlayer to the underlayer at a constant total PGM loading on the substrate improves exotherm quench temperature. Additionally, the addition of the cellulose pore former in the inlet overlying layer unexpectedly improves the post-phosphorus ageing exotherm quench temperature. This effect is discussed in Example 12.

### Example 12 - Additional comparison of particulate cellulose pore former inclusion in second catalyst washcoat (inlet) layer

Two samples - both of the invention - were prepared according to Figure 1C and Example 5, wherein the first washcoat layer loading was 1.23 g/L (0.35 g/ft³) at 5:1 Pt:Pd weight ratio (no barium) and the axial length of the first washcoat layer on the substrate was 25%. The second (inlet) catalyst washcoat (the overlayer) loading was 85.4 g/L (1.4 g/in³). In one sample, the second (inlet) catalyst washcoat included 40wt% particulate cellulose pore former, relative to the loading of the silica-doped alumina support material.

Phosphorous aging was performed at 650°C for 50 hours for 3 cycles. The exotherm quench temperature was assessed according to the Example 3 methodology. The aged quench temperature of the first sample (no pore former) was 267.2°C and the second sample (with pore former) was 261.5°C. Phosphorus ageing was done according to Example 4, following which the exotherm quench temperature was found to be 301.1°C and for the second sample 275.4°C. HC slip was significantly reduced at lower temperatures for the sample including the pore former relative to the non-pore former sample.

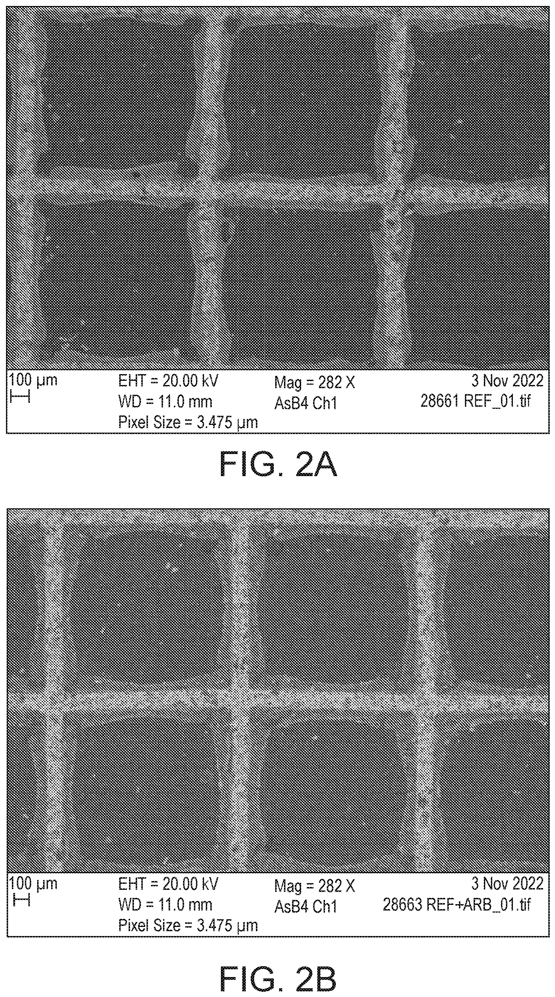

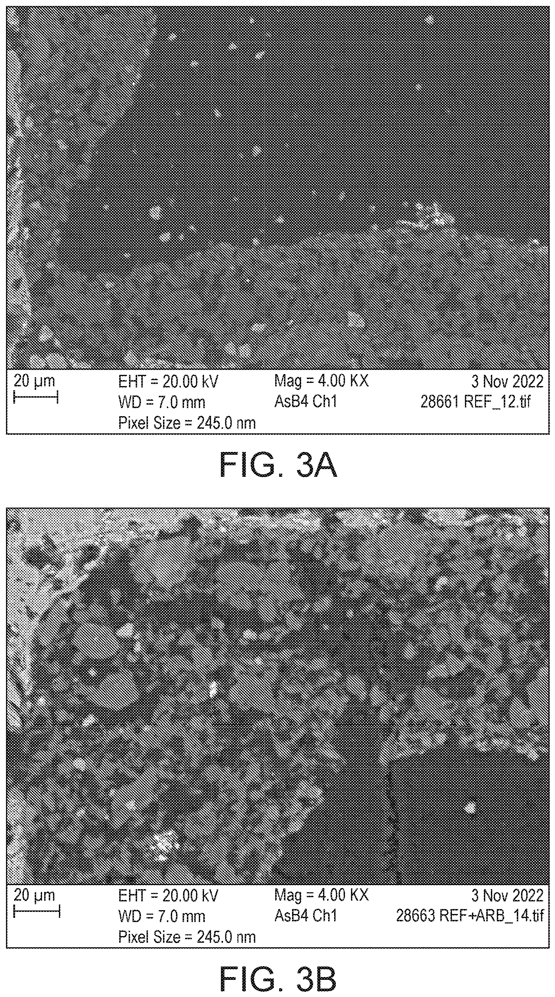

SEM images were taken of the washcoats obtained in the two samples. These are set out in Figure 2. Figure 2A shows a washcoat without the pore-former. Figure 2B shows a washcoat formed with the pore-former (since calcined away). Figure 3 shows a close-up image. Figure 3A shows a washcoat without the pore-former. Figure 3B shows a washcoat formed with the pore-former (since calcined away). As can be seen, the addition of the cellulosic pore-former leads to a thicker but more porous washcoat. Energy Dispersive X-Ray (EDX) mapping revealed that the phosphorus deposited during aging remained on the surface. This suggests that the PGMs in the underlying washcoat are well spaced from the phosphorus laid down. Nonetheless, the higher permeability of the layer following pore former removal permits good contact between the exhaust gases and the underlying PGMs present.

Back pressure was also investigated and it was observed that the addition of the pore former - which increases washcoat thickness - only increased the back-pressure by 20 Pa (0.2 mBar).

The foregoing detailed description has been provided by way of explanation and illustration and is not intended to limit the scope of the appended claims. Many variations in the presently preferred embodiments illustrated herein will be apparent to one of ordinary skill in the art and remain within the scope of the appended claims and their equivalents.

## Claims

1. An oxidation catalyst article comprising:
a flow-through honeycomb substrate having an inlet end and an outlet end and a longitudinal length extending therebetween and comprising an array of channels each defined by a channel wall,
a first washcoat extending from the inlet end up to 40% of the longitudinal length of the substrate and comprising a first platinum group metal composition on a first alumina support, the first washcoat having a total combined loading of Pt and Pd of X g/L (gft⁻³),
a second washcoat extending from the inlet end up to 85% of the longitudinal length of the substrate and entirely overlapping the first washcoat, the second washcoat comprising a second platinum group metal composition on a second alumina support, the second washcoat having a total combined loading of Pt and Pd of Y g/L (gft⁻³); and
a third washcoat extending from the outlet end comprising a third platinum group metal composition wherein the third platinum group metal composition is platinum only or both platinum and palladium on a third alumina support, the third washcoat having a total platinum group metal loading of Z g/L (gft⁻³);
wherein 2Z<X>1.5Y, optionally 2Z<X>2Y and
wherein the third washcoat does not overlap the first washcoat.

2. The oxidation catalyst article according to claim 1, wherein the first washcoat extends from the inlet end from 20 to 40% of the longitudinal length of the substrate, preferably 20 to 30% of the longitudinal length of the substrate.

3. The oxidation catalyst article according to claim 1 or 2, wherein:
(i) 10Y>X>4Y and/or
(ii) 20Z>X>4Z and/or
(iii) Y≥Z and preferably Y>Z.

4. The oxidation catalyst article according to any one of the preceding claims, wherein one, two or all of the following applies:
(i) X is from 0.71 to 2.19 g/L (20 to 60 gft⁻³);
(ii) Y is from 0.07 to 0.71 g/L (2 to 20 gft⁻³);
(iii) Z is from 0.04 to 0.71 g/L (1 to 20 gft⁻³).

5. The oxidation catalyst article according to any one of the preceding claims, wherein the total loading of platinum group metal in the oxidation catalyst article is from 0.35 to 1.59 (10 to 45 gft⁻³).

6. The oxidation catalyst according to any one of the preceding claims, wherein the washcoat loading in the second washcoat is from 15.3 to 106.8 g/L (0.25 to 1.75 g/in³), preferably 45.8 to 91.5 g/L (0.75 to 1.5 g/in³).

7. The oxidation catalyst article according to any one of the preceding claims, wherein the second washcoat has a greater porosity than the third washcoat, preferably wherein the pore volume per unit volume of the second washcoat is at least 10% greater than pore volume per unit volume of the third washcoat, preferably at least 20%.

8. The oxidation catalyst article according to any one of the preceding claims, wherein the first platinum group metal composition comprises Pt and Pd in a first weight ratio of from 1:1 to 6:1, preferably 2.5:1 to 6:1.

9. The oxidation catalyst article according to any one of the preceding claims, wherein the second platinum group metal composition comprises Pt and Pd in a second weight ratio of 1:1 to 6:1, preferably 1:1 to 3:1.

10. The oxidation catalyst article according to any one of the preceding claims, wherein the third platinum group metal composition comprises Pt and Pd in a third ratio of 1:0≥4:1.

11. The oxidation catalyst article according to any one of the preceding claims, wherein the first washcoat, second washcoat and/or third washcoat comprises barium.

12. The oxidation catalyst article according to any one of the preceding claims, wherein the second washcoat extends from 50 to 85% of the longitudinal length of the substrate, and/or wherein the third washcoat extends from 60 to 20% of the longitudinal length of the substrate, and/or wherein the second and third washcoats overlap for 10 to 30% of the longitudinal length of the substrate.

13. An exhaust gas treatment system comprising the oxidation catalyst article according to any one of the preceding claims, wherein the inlet end of the substrate is oriented to the upstream side.

14. The exhaust gas treatment system according to claim 13, wherein the oxidation catalyst article is upstream of a CSF and/or an SCR and/or an SCR coated filter.

15. A method for the manufacture of the oxidation catalyst article according to any one of claims 1 to 12, the method comprising:
1) providing a flow-through honeycomb substrate;
2) providing first, second and third washcoat slurries, each comprising an alumina support;
3) washcoating the washcoat slurries onto the substrate; and
4) calcining the coated substrate;
wherein the pre-calcined second washcoat slurry comprises an organic pore-former which is decomposed in calcination step 4), wherein the organic pore-former provides at least 10wt%, preferably 20 to 45wt%, relative to the weight of the alumina support in the second washcoat suspension.

## Patentansprüche

1. Oxidationskatalysatorartikel, umfassend:
ein Durchflusswabensubstrat mit einem Einlassende und einem Auslassende und einer dazwischen verlaufenden Längslänge, das eine Anordnung von Kanälen umfasst, die jeweils durch eine Kanalwand definiert sind,
einen ersten Washcoat, der sich vom Einlassende bis zu 40 % der Längslänge des Substrats erstreckt und eine erste Platingruppenmetallzusammensetzung auf einem ersten Aluminiumoxidträger umfasst, wobei der erste Washcoat eine kombinierte Gesamtbeladung von Pt und Pd von X g/l (gft⁻³) aufweist,
einen zweiten Washcoat, der sich vom Einlassende bis zu 85 % der Längslänge des Substrats erstreckt und den ersten Washcoat vollständig überlappt, wobei der zweite Washcoat eine zweite Platingruppenmetallzusammensetzung auf einem zweiten Aluminiumoxidträger umfasst, wobei der zweite Washcoat eine kombinierte Gesamtbeladung von Pt und Pd von Y g/l (gft⁻³) aufweist; und
einen dritten Washcoat, der sich vom Auslassende erstreckt und eine dritte Platingruppenmetallzusammensetzung umfasst, wobei die dritte Platingruppenmetallzusammensetzung nur Platin oder sowohl Platin als auch Palladium auf einem dritten Aluminiumoxidträger ist, wobei der dritte Washcoat eine Gesamtbeladung mit Platingruppenmetallen von Z g/l (gft⁻³) aufweist;
wobei 2Z<X>1,5Y, optional 2Z<X>2Y und
wobei der dritte Washcoat den ersten Washcoat nicht überlappt.

2. Oxidationskatalysatorartikel nach Anspruch 1, wobei sich der erste Washcoat vom Einlassende 20 bis 40 % der Längslänge des Substrats erstreckt, vorzugsweise 20 bis 30 % der Längslänge des Substrats.

3. Oxidationskatalysatorartikel nach Anspruch 1 oder 2, wobei:
(i) 10Y>X>4Y und/oder
(ii) 20Z>X>4Z und/oder
(iii) Y≥Z und vorzugsweise Y>Z.

4. Oxidationskatalysatorartikel nach einem der vorstehenden Ansprüche, wobei einer, zwei oder alle der folgenden Punkte zutreffen:
(i) X ist von 0,71 bis 2,19 g/l (20 bis 60 gft⁻³);
(ii) Y ist von 0,07 bis 0,71 g/l (2 bis 20 gft⁻³);
(iii) Z ist von 0,04 bis 0,71 g/l (1 bis 20 gft⁻³).

5. Oxidationskatalysatorartikel nach einem der vorstehenden Ansprüche, wobei die Gesamtbeladung von Platingruppenmetall in dem Oxidationskatalysatorartikel 0,35 bis 1,59 g/l (10 bis 45 gft⁻³) beträgt.

6. Oxidationskatalysator nach einem der vorstehenden Ansprüche, wobei die Washcoat-Beladung im zweiten Washcoat von 15,3 bis 106,8 g/l (0,25 bis 1,75 g/in³), vorzugsweise von 45,8 bis 91,5 g/l (0,75 bis 1,5 g/in³) beträgt.

7. Oxidationskatalysatorartikel nach einem der vorstehenden Ansprüche, wobei der zweite Washcoat eine größere Porosität aufweist als der dritte Washcoat, wobei vorzugsweise das Porenvolumen pro Volumeneinheit des zweiten Washcoats mindestens 10 % größer ist als das Porenvolumen pro Volumeneinheit des dritten Washcoats, vorzugsweise mindestens 20 %.

8. Oxidationskatalysatorartikel nach einem der vorstehenden Ansprüche, wobei die erste Platingruppenmetallzusammensetzung Pt und Pd in einem ersten Gewichtsverhältnis von 1:1 bis 6:1, vorzugsweise 2,5:1 bis 6:1, umfasst.

9. Oxidationskatalysatorartikel nach einem der vorstehenden Ansprüche, wobei die zweite Platingruppenmetallzusammensetzung Pt und Pd in einem zweiten Gewichtsverhältnis von 1:1 bis 6:1, vorzugsweise 1:1 bis 3:1, umfasst.

10. Oxidationskatalysatorartikel nach einem der vorstehenden Ansprüche, wobei die dritte Platingruppenmetallzusammensetzung Pt und Pd in einem dritten Verhältnis von 1:0≥4:1 umfasst.

11. Oxidationskatalysatorartikel nach einem der vorstehenden Ansprüche, wobei der erste Washcoat, der zweite Washcoat und/oder der dritte Washcoat Barium umfassen.

12. Oxidationskatalysatorartikel nach einem der vorstehenden Ansprüche, wobei sich der zweite Washcoat von 50 bis 85 % der Längslänge des Substrats erstreckt und/oder wobei sich der dritte Washcoat von 60 bis 20 % der Längslänge des Substrats erstreckt und/oder wobei sich der zweite und der dritte Washcoat für 10 bis 30 % der Längslänge des Substrats überlappen.

13. Abgasbehandlungssystem, das den Oxidationskatalysatorartikel nach einem der vorstehenden Ansprüche umfasst, wobei das Einlassende des Substrats zur stromaufwärtigen Seite ausgerichtet ist.

14. Abgasbehandlungssystem nach Anspruch 13, wobei sich der Oxidationskatalysatorartikel vor einem CSF und/oder einem SCR und/oder einem SCR-beschichteten Filter befindet.

15. Verfahren zum Herstellen des Oxidationskatalysatorartikels nach einem der Ansprüche 1 bis 12, wobei das Verfahren umfasst:
1) Bereitstellen eines Durchflusswabensubstrats;
2) Bereitstellen einer ersten, zweiten und dritten Washcoat-Aufschlämmung, die jeweils einen Aluminiumoxidträger umfassen;
3) Aufbringen der Washcoat-Aufschlämmungen auf das Substrat; und
4) Kalzinieren des beschichteten Substrats;
wobei die vorkalzinierte zweite Washcoat-Aufschlämmung einen organischen Porenbildner umfasst, der im Kalzinierungsschritt 4) zersetzt wird, wobei der organische Porenbildner mindestens 10 Gew.-%, vorzugsweise 20 bis 45 Gew.-%, bezogen auf das Gewicht des Aluminiumoxidträgers in der zweiten Washcoat-Suspension, ausmacht.

## Revendications

1. Article catalyseur d'oxydation comprenant :
un substrat en nid d'abeilles à écoulement traversant ayant une extrémité d'entrée et une extrémité de sortie et une longueur longitudinale s'étendant entre elles et comprenant un réseau de canaux définis chacun par une paroi de canal,
une première couche d'imprégnation s'étendant de l'extrémité d'entrée jusqu'à 40 % de la longueur longitudinale du substrat et comprenant une première composition de métal du groupe du platine sur un premier support d'alumine, la première couche d'imprégnation ayant un chargement combiné total en Pt et Pd de X g/L (g.pied⁻³),
une deuxième couche d'imprégnation s'étendant de l'extrémité d'entrée jusqu'à 85 % de la longueur longitudinale du substrat et chevauchant entièrement la première couche d'imprégnation, la deuxième couche d'imprégnation comprenant une deuxième composition de métal du groupe du platine sur un deuxième support d'alumine, la deuxième couche d'imprégnation ayant un chargement combiné total en Pt et Pd de Y g/L (g.pied⁻³) ; et
une troisième couche d'imprégnation s'étendant à partir de l'extrémité de sortie comprenant une troisième composition de métal du groupe du platine dans lequel la troisième composition de métal du groupe du platine est du platine seul ou à la fois du platine et du palladium sur un troisième support d'alumine, la troisième couche d'imprégnation ayant un chargement total en métal du groupe du platine de Z g/L (g.pied⁻³) ;
dans lequel 2Z<X>1,5Y, facultativement 2Z<X>2Y et
dans lequel la troisième couche d'imprégnation ne chevauche pas la première couche d'imprégnation.

2. Article catalyseur d'oxydation selon la revendication 1, dans lequel la première couche d'imprégnation s'étend à partir de l'extrémité d'entrée à partir de 20 à 40 % de la longueur longitudinale du substrat, de préférence 20 à 30 % de la longueur longitudinale du substrat.

3. Article catalyseur d'oxydation selon la revendication 1 ou 2, dans lequel :
(i) 10Y>X>4Y et/ou
(ii) 20Z>X>4Z et/ou
(iii) Y≥Z et de préférence Y>Z.

4. Article catalyseur d'oxydation selon l'une quelconque des revendications précédentes, dans lequel un, deux ou la totalité de ce qui suit s'applique :
(i) X va de 0,71 à 2,19 g/L (20 à 60 g.pied⁻³) ;
(ii) Y va de 0,07 à 0,71 g/L (2 à 20 g.pied⁻³) ;
(iii) Z va de 0,04 à 0,71 g/L (1 à 20 g.pied⁻³).

5. Article catalyseur d'oxydation selon l'une quelconque des revendications précédentes, dans lequel le chargement total en métal du groupe du platine dans l'article catalyseur d'oxydation va de 0,35 à 1,59 (10 à 45 g.pied⁻³).

6. Catalyseur d'oxydation selon l'une quelconque des revendications précédentes, dans lequel le chargement de couche d'imprégnation dans la deuxième couche d'imprégnation va de 15,3 à 106,8 g/L (0,25 à 1,75 g/po³), de préférence 45,8 à 91,5 g/L (0,75 à 1,5 g/po³).

7. Article catalyseur d'oxydation selon l'une quelconque des revendications précédentes, dans lequel la deuxième couche d'imprégnation a une plus grande porosité que la troisième couche d'imprégnation, de préférence dans lequel le volume de pore par volume unitaire de la deuxième couche d'imprégnation est au moins 10 % supérieur au volume de pore par volume unitaire de la troisième couche d'imprégnation, de préférence au moins 20 %.

8. Article catalyseur d'oxydation selon l'une quelconque des revendications précédentes, dans lequel la première composition de métal du groupe du platine comprend Pt et Pd dans un premier rapport pondéral allant de 1:1 à 6:1, de préférence 2,5:1 à 6:1.

9. Article catalyseur d'oxydation selon l'une quelconque des revendications précédentes, dans lequel la deuxième composition de métal du groupe du platine comprend Pt et Pd dans un deuxième rapport pondéral de 1:1 à 6:1, de préférence 1:1 à 3:1.

10. Article catalyseur d'oxydation selon l'une quelconque des revendications précédentes, dans lequel la troisième composition de métal du groupe du platine comprend Pt et Pd dans un troisième rapport de 1:0≥4:1.

11. Article catalyseur d'oxydation selon l'une quelconque des revendications précédentes, dans lequel la première couche d'imprégnation, la deuxième couche d'imprégnation et/ou la troisième couche d'imprégnation comprennent du baryum.

12. Article catalyseur d'oxydation selon l'une quelconque des revendications précédentes, dans lequel la deuxième couche d'imprégnation s'étend à partir de 50 à 85 % de la longueur longitudinale du substrat, et/ou dans lequel la troisième couche d'imprégnation s'étend à partir de 60 à 20 % de la longueur longitudinale du substrat, et/ou dans lequel les deuxième et troisième couches d'imprégnation se chevauchent sur 10 à 30 % de la longueur longitudinale du substrat.

13. Système de traitement de gaz d'échappement comprenant l'article catalyseur d'oxydation selon l'une quelconque des revendications précédentes, dans lequel l'extrémité d'entrée du substrat est orientée vers le côté en amont.

14. Système de traitement de gaz d'échappement selon la revendication 13, dans lequel l'article catalyseur d'oxydation est en amont d'un CSF et/ou d'un SCR et/ou d'un filtre revêtu de SCR.

15. Procédé destiné à la fabrication de l'article catalyseur d'oxydation selon l'une quelconque des revendications 1 à 12, le procédé comprenant :
1) la fourniture d'un substrat en nid d'abeilles à écoulement traversant ;
2) la fourniture de première, deuxième et troisième bouillies de couche d'imprégnation, comprenant chacune un support d'alumine ;
3) l'enduction en couche d'imprégnation des bouillies de couche d'imprégnation sur le substrat ; et
4) la calcination du substrat revêtu ;
dans lequel la deuxième bouillie de couche d'imprégnation pré-calcinée comprend un agent porogène organique qui est décomposé à l'étape de calcination 4), dans lequel l'agent porogène organique fournit au moins 10 % en poids, de préférence 20 à 45 % en poids, par rapport au poids du support d'alumine dans la deuxième suspension de couche d'imprégnation.
